# EUROPEAN PATENT SPECIFICATION

(11) **EP 0 843 600 B1**
(45) Date of publication and mention of the grant of the patent: **10.01.2001**
(21) Application number: 96925755.9
(22) Date of filing: 10.07.1996
(51) Int. Cl.: B07B 1/46, B01D 29/07

(54) **SCREEN FOR USE IN VIBRATORY SHAKER DEVICE**
SIEB ZUR VERWENDUNG IN VIBRATIONSSCHÜTTLERN
CRIBLE POUR SYSTEME DE TAMIS VIBRANT

(30) Priority: 20.07.1995 US 504495
(43) Date of publication of application: 27.05.1998
(73) Proprietor: Tuboscope I/P Inc., Houston, TX 77051 (US)
(72) Inventor: LEONE, Vincent, D., Houston, TX 77077 (US); WALKER, Jeffrey, E., Lafayette, LA 70501 (US); GRICHAR, Charles, N., Houston, TX 77009 (US); MCCLUNG, Guy, L., Spring, TX 77379 (US); SEYFFERT, Kenneth, W., Houston, TX 77018 (US)
(74) Representative: Lucas, Brian Ronald
(86) International application number: PCT/EP96/03103
(87) International publication number: WO 97/03765

(56) References cited:
- EP-A- 0 100 132
- WO-A-94/23849
- DE-C- 812 740
- FR-A- 2 407 026
- GB-A- 781 194
- GB-A- 823 648
- US-A- 3 255 885
- US-A- 4 380 494
- US-A- 5 417 858

## Description

The present invention relates to a filter screen for a vibratory shaker, and to a vibratory shaker provided with at least one filter screen as aforesaid.

The need for solids control in drilling mud used in hydrocarbon well drilling is well known. Drilling mud is typically a mixture of clay, water and various additives. It is pumped down through a hollow drill string (pipe, drill collar, bit, etc.) into a well being drilled and exits through holes in a drill-bit. The mud picks up rock cuttings and other solids from the well and carries them upwardly away from the bit and out of the well in a space between the well walls and the drill string. If drilled solids are not removed from the mud used during the drilling operation, recirculation of the drilled solids can give rise to weight, viscosity and gel problems in the mud, as well as increasing wear on mud pumps and other mechanical equipment used for drilling. Therefore, at the top of the well, the solids-laden mud is discharged over a shale shaker, which is a device which typically has a series of screens arranged in tiered or flat disposition with respect to each other. The screens catch and remove solids from the mud as the mud passes through them. The prior art discloses a wide variety of screens for shale shakers, and of vibratory shaker devices which use them.

In some shale shakers a fine screen cloth is used with the vibrating screen. The screen may have two or more layers of screen cloth. It is known that the layers may be bonded together, and that one or more supports or a perforated or apertured plate may be used beneath the screen or screens. The frame of the vibrating screen is resiliently suspended or mounted upon a support and is caused to vibrate by a vibrating mechanism e.g. an unbalanced weight on a rotary shaft connected to the frame. For removal and disposal of solids, each screen may be vibrated by vibratory equipment to create a flow of trapped solids on the top surface of the screen. The fineness or coarseness of the mesh of a screen may vary depending upon mud flow rate and the size of solids to be removed.

Many screens used with shale shakers are flat or nearly flat (i.e. substantially two-dimensional). Other screens are three-dimensional and have corrugated, depressed or raised surfaces. US-A-5 417 793, 5 417 858 and 5 417 859 disclose non-flat screens for shale shakers, with the screen of US 5 417 858 disclosing a corrugated filter element supported by a perforated plate. These screens have a lower planar apertured plate with a multiplicity of spaced-apart apertures or openings therethrough. Undulating screening material is bonded to the apertured plate at the undersides of the troughs. However, such screens have a number of disadvantages. The flow area is occluded by solid parts of the apertured plate. It is necessary either to purchase apertured plate, which is relatively expensive, or to provide for in-house perforation of a solid plate. The weight of the plate increases wear on parts such as rubber screen supports or cushions and can inhibit vibration. The large surface area of the plate requires a relatively large amount of bonding material for bonding screens to the plate. The greater the weight of the finished screen is, the more difficult and dangerous it is to handle, and the more it costs to transport.

FR-A-2 407 026 discloses a flat rectangular filter element mechanically supported by a T-sectioned bar.

There is a need for a supported three-dimensional screen which is efficient, disposable and cost-effective, but easy and inexpensive to make, easy to handle and relatively inexpensive to transport.

The present invention provides a filter screen for a vibratory shaker in the form of a corrugated filter element resting on a support which allows the filtrate to pass through it, characterised in that the support takes the form of two or more relatively narrow spaced apart separate and distinct strips of material in load-bearing contact with at least the troughs of the corrugations.

Further features are set out in Claims 2 to 17.

The present invention also provides a vibratory shaker provided with at least one filter screen in accordance with the invention.

Preferably, the flow of the liquid to be filtered is generally parallel to the direction of the corrugations.

Alternativley, the flow of the liquid to be filtered may be generally perpendicular to the direction of the corrugations.

The screen of the invention may have one or more upper screen, screen cloth or screen mesh layers. If more than one layer is present, the layers may be bonded together at discrete points, at discrete areas or over their entire surface.

The layer or layers are mounted on frame which may have rigid supports on each of two spaced-apart sides of the layers or may be a full four-sided frame.

The support material may be of steel, aluminium or plastics and takes the form of strips of any appropriate width and thickness, typically 1.3-7.6 cm (0.5-3") in width and 0.8-3.2 mm (1/32-1/8") in thickness. The screen may use strips of different materials. Where the frame consists of supports on each of two spaced-apart sides, the strips may be directed parallel to the two sides. The strips also may be directed non-parallel to the two sides.

Some or all of the troughs may be bonded to a strip or strips or portions thereof, and all or only a portion of a trough may be bonded to a strip or strips.

Some known shaker screens have a frame side with an in-turned edge which facilitates hooking of the screen e.g. to a vibrating basket. In one form of screen, a strip as described above which extends between two frame sides may also extend into and become this in-turned hooked edge. In another form of frame a strip or strips is or are secured to a portion of a side member providing a hook. To reduce or prevent fluid leakage at the interface between the hook and the strip, a steel strip may be welded to a metal hook or a non-metal strip may be bonded to a metal or non-metal hook. In a further form of frame, side members are not present and only a series of strips with hook edges supports the screening material and provides for its mounting to a shale shaker. In other embodiments in which two frame sides are used, support strips at opposite ends of the frame sides may also serve as end members across the ends of the layer which are not provided with side members. Such strips may be located at the leading and trailing edges of the layers.

Where the undulations in the layer form depressed or lower areas on or across the layer which form a generally lower path for fluid moving part-way or the whole of the way across the screen, the support strip or strips may be positioned beneath the layer or layers at any desired angle to the direction of flow of fluid across the screen. Where the entire screen surface has undulations in the same general direction, the screen may be disposed so that fluid flows across the screen either in the same direction as the undulations or transverse to the undulations. In either case, the strip or strips beneath the layers may be in the direction of flow or transverse to it.

The strips described above may have one or more projection portions formed integrally therewith or secured thereto and which project into troughs or areas of the layers. Such projecting portions may be shaped or configured to mate with the shape of a hill, valley, trough or indented area. They may be bonded to the layers at such areas, may be bonded only to the sides of such areas and not to the uppermost part of a raised portion thereof, or may be adjacent such areas without bonding thereto. If there is a series of parallel troughs or a plurality of adjacent indented areas, such projections may be provided in all such troughs or areas, in only one such trough or area, in troughs or areas only adjacent frame sides, or only in troughs or areas in the middle of the frame.

Where the screen has a series of parallel troughs, alternating flat strips and strips with one or more projections as described above can be used. Non-flat strips can be used which have a shape that corresponds to the series of troughs, e.g. with an undulating layer or layers, a corresponding undulating strip can be used. Such strips can be used instead of or in combination with flat strips as previously described.

Any strip used herein may have holes through it to facilitate fluid flow.

In the screens used herein, the screening material may be sintered to itself, individual screen wires may be sintered to each other, one or more layers of screen material, cloth, mesh or screen may be sintered to each other, and any screen material may be sintered to any strip disclosed herein, either entirely along its length or at selected points or areas therealong.

A screen as described in Patents US-A-5417793, 5417858 and 5417859 may be provided but with the apertured plate required by these patents omitted, and there being used instead any combination of strips or pattern of strips disclosed herein.

The invention will now be described, by way of example only, with reference to the accompanying drawings, in which:
Figs. 1A-1D are respectively a perspective view, a side view, and end view and a bottom view of a screen according to the invention;
Figs. 2A-2C are respectively a top view, a side view and a bottom view of a second screen according to the invention;
Figs. 3-5 are bottom views of third to sixth screens according to the invention;
Figs. 6, 7 and 8 are respectively a bottom view of part of a screen in accordance with the present invention; an end view of part a screen in accordance with the present invention in use with a screen hook; and an end view of part of the screen and screen hook of Fig. 8A;
Figs. 9-11 are end cross-sectional views of strips for use in the present invention;
Figs. 12 and 13 are end views of parts of screens according to the invention;
Fig. 14 is a perspective view of a shale shaker according to the invention;
Figs. 15A-15B are respectively a bottom view and a side view of a further screen according to the invention
Figs. 16A-16B are respectively a top and a side view of a support strip according to the invention; and
Figs. 17A-17B are top and side views of a further support strip according to the invention.

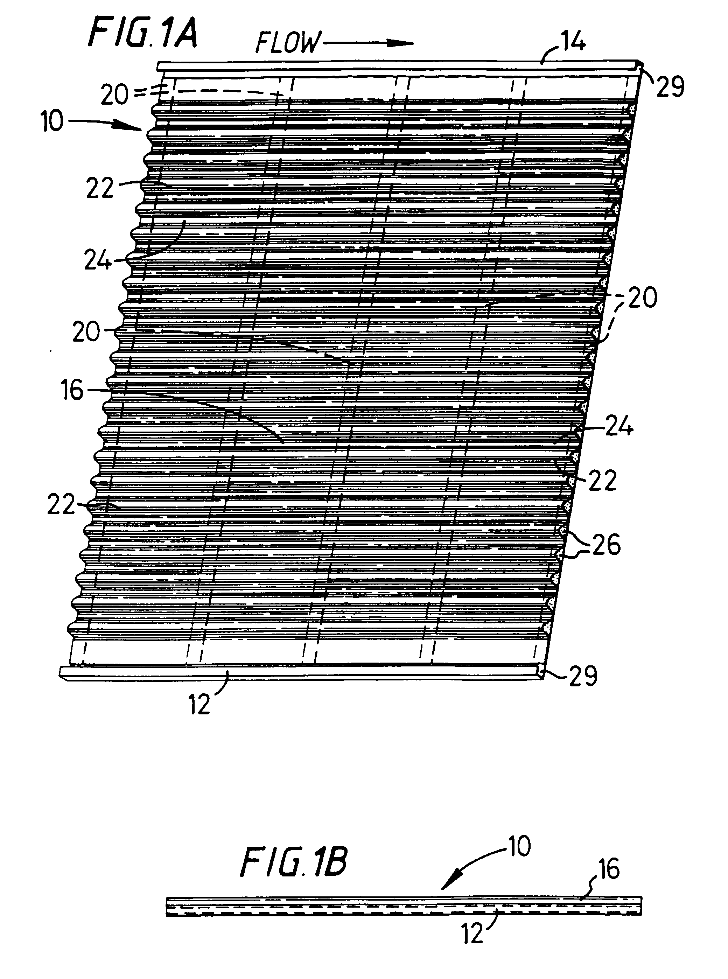

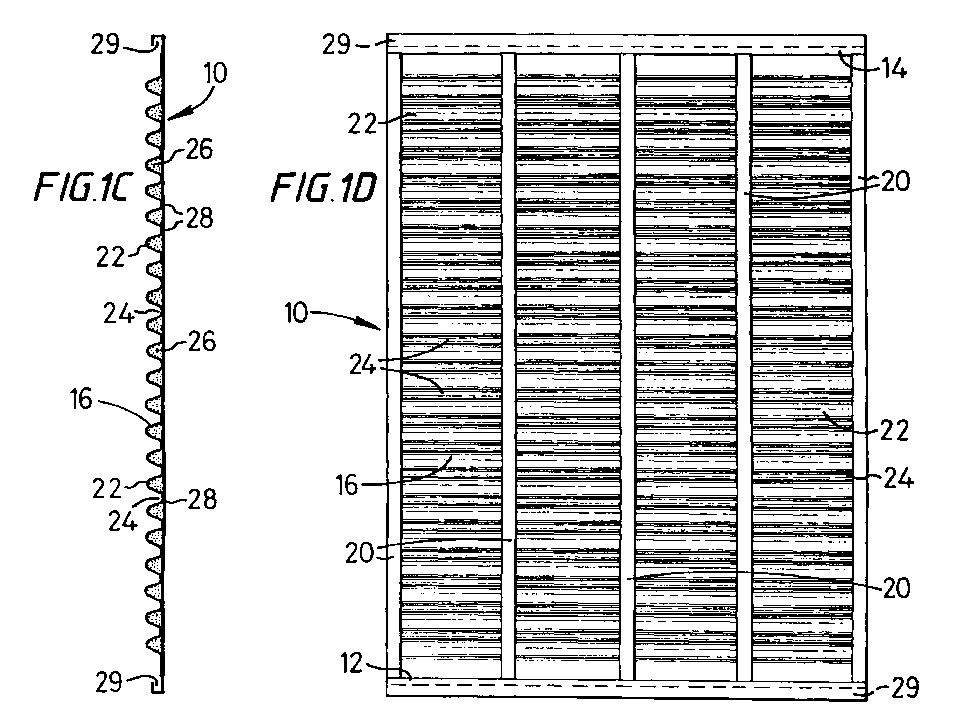

In Figs. 1A-1D, a rectangular screen 10 has a frame with two side members 12,14 connected to strips 20 which extend between the side members 12, 14. The strips 20 provide a support for a screen 16 which is an undulating screen with hills 22 and valleys 24. The undulations are directed transversely of the frame parallel to the side members 14 and crossing the strips 20. Plugs 26 plug the ends of the hills 22. Three-dimensional screens with plugged ends are already known. The screen 16, and any other screen or screening material disclosed herein, represents any known mesh, screen or screens, in any combination, bonded together or unbonded. Each bottom part 28 of a valley 24 is glued by epoxy or other adhesive to the strips 20 where the strips 20 run under the screen material 16. The side members 12,14 optionally have a hook portion 29 which facilitates screen mounting in certain shale shakers. When the screen 10 is mounted in a shale shaker, the direction of flow of drilling fluid (indicated by the arrow labelled FLOW) is generally parallel to the undulations.

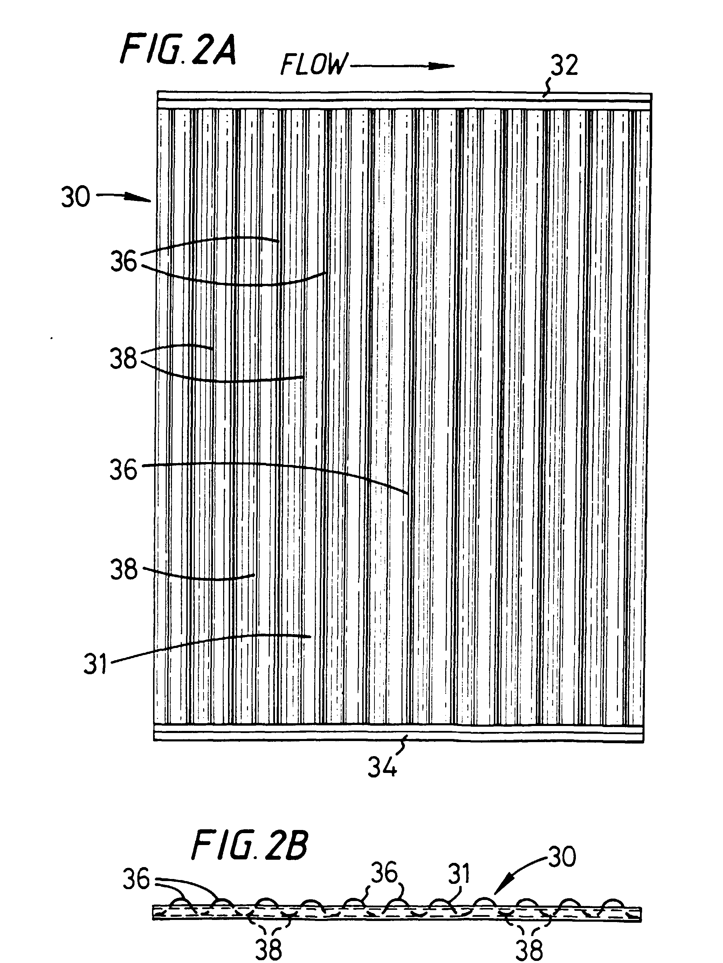

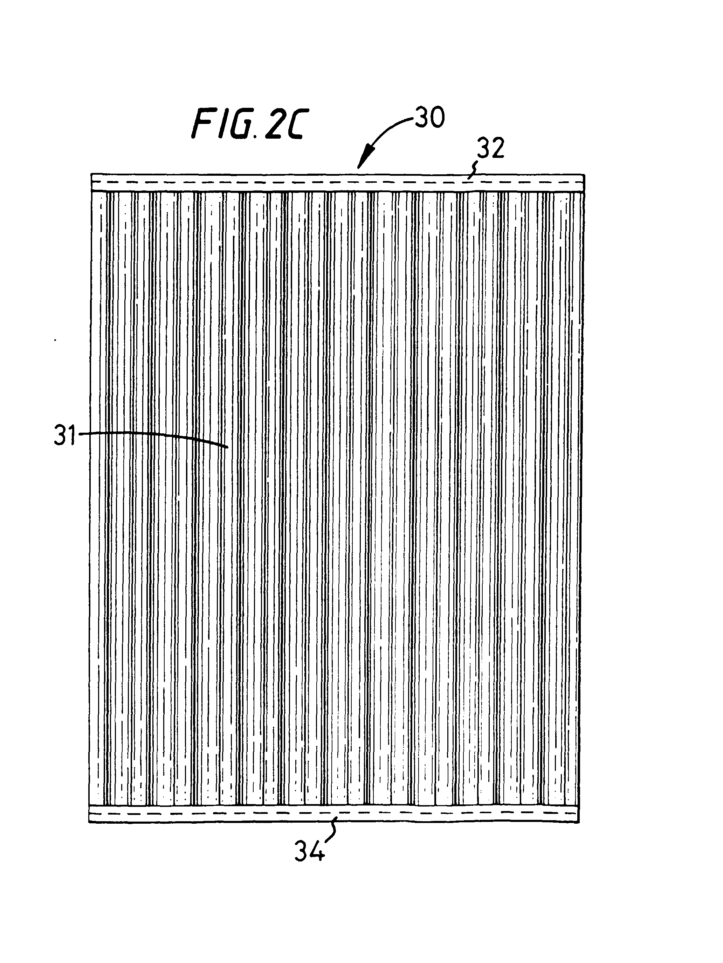

Figs. 2A-2C show a rectangular screen 30 having frame side members 32,34 between which is mounted undulating screen material 31 with its folds directed longitudinally of the frame. Any strip or strip combination disclosed herein can be used in the screen 30 below the screen material 31. The undulations are defined by hilltops 36 and valleys 38 of the screen material 31, which are directed generally perpendicular to the side members 32. When the screen is mounted on a shale shaker, the direction of flow of drilling fluid is across the screen 30 (as shown by the arrow labelled FLOW) and at right angles to the general direction of the hills and valleys 36,38. In one form of the screen the strips are aligned with the direction of the valleys.

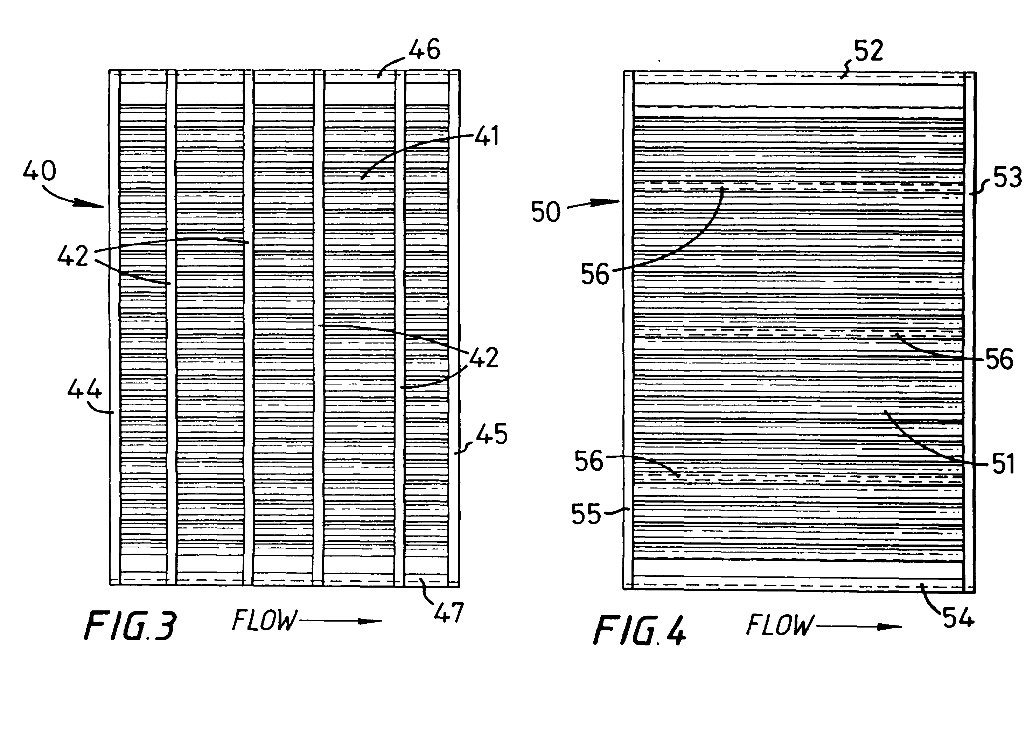

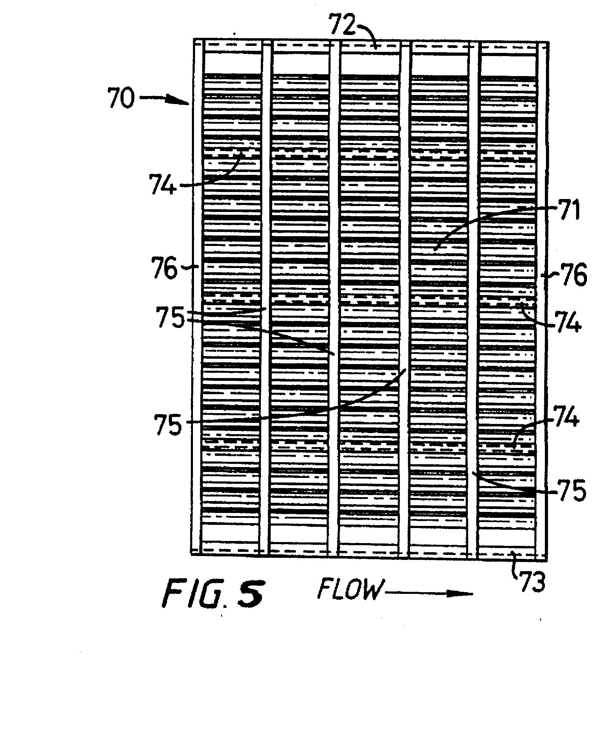

Figs. 3-5 show rectangular frames having alternative configurations of bottom support strip which can be used with any screen disclosed herein, and with any form of screening material disclosed herein. Fig 3 shows a screen 40 having undulating screening material 41 whose folds run transversely of the screen between frame side members 46,47. A bottom support structure comprises four longitudinally directed strips 42 spaced apart transversely of the frame and like those in Fig 1D and two further strips 44,45 along the ends of the screening material 41, which strips are like the previously described strips. Fig 4 shows a screen 50 having screening material 51 within a frame defined by side members 52,54 and end members 53,55. Three support strips 56 are spaced apart along the frame and run from one end member 55 to the other end member 53. Fig. 5 shows a further screen 70 with screening material 71 whose undulations run transversely of the frame. The screen has side members 72,73 and end strips 76. Three strips 74 are spaced apart at intervals longitudinally of the frame and run transversely of the frame from one end strip 76 to the other. Four strips 75 are spaced apart at intervals transversely of the frame and run from one side member 72 to the other side member 73.

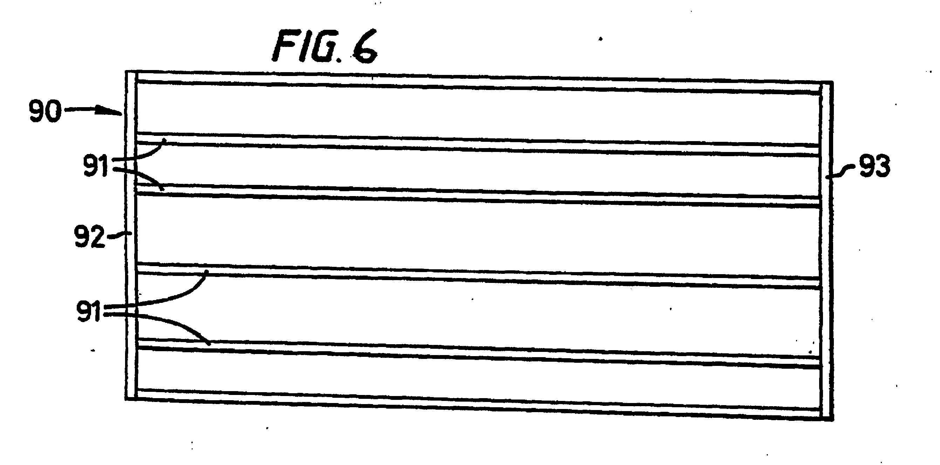

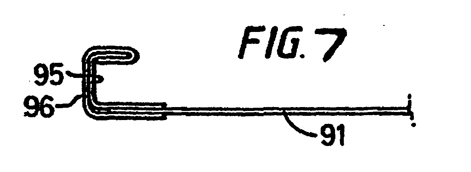

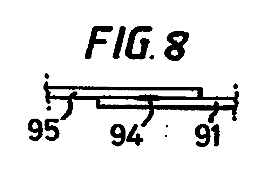

Figs 6, 7 and 8 show a bottom strip support assembly 90 for a screen according to the present invention. A plurality of strips 91 extend between and are secured to frame sides 92 and 93. As shown in Fig 8, a strip 91 is welded along line 94 to part of a screen hook 95. The weld is sized and configured to prevent leakage at the hook/strip interface. A sleeve 96 made of galvanised metal encases the hook for added strength and protection. The strips 91 in Fig 6 are 0.8-3.2 mm (1/32-1/8") thick.

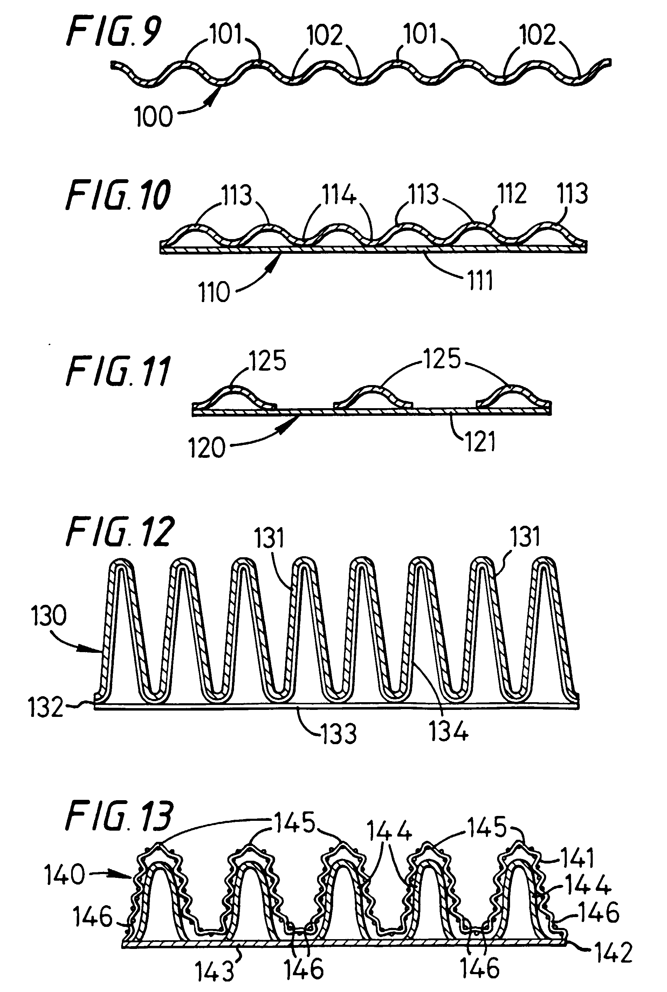

Fig. 9 shows a screen support strip 100 having hilltops 101 and valleys 103 for corresponding to similar hills and valleys in a screen or screening material to which the strip is applied.

Fig. 10 shows a further form of screen support strip 110 which comprises a bottom strip 111 which is flat and an upper strip 112 which is undulating and is fixed to the bottom strip 111. The undulating strip 112 has hilltops 113 and valleys 114 for corresponding to a screen or screening material with similar hills and valleys.

Fig. 11 shows a further support strip 120 which resembles the support strip 110 but has fewer projecting portions 125 which are spaced apart from one another so that when a screen with multiple troughs or indentations is supported by the strip 120, only every other trough or indentation in the screen or screening material is entered by a projecting portion 125. The projections 125 bay be disposed as required to support a particular trough, number of troughs or pattern of troughs. The support strip 120 comprises a lower strip 121 which is flat and carries the projecting portions 125.

Fig. 12 shows a screen 130 having screening material 131 (which may be any screen or screening material disclosed herein) supported by a support strip 132. The support strip has a flat bottom strip 133 and an undulating strip 134 secured thereto. The screening material 131 may rest on the undulating strip 134, some or all of which may be bonded to the screening material.

Fig. 13 shows a screen 140 which comprises screening material 141 which may be any screen or screening material disclosed herein. The material 141 is supported by support strip 142 which comprises a flat lower strip 143 which carries projecting strip portions 144 spaced apart from one another and secured to the upper face of the strip 143. The material 141 is undulating and the projections 144 project up into the hills formed in the screening material. In any embodiment of the invention in which part of a support strip projects up into a raised part of a screen, the projecting strip may be connected to, adhesively bonded to, or welded to the screen at any selected point, line, points or lines in the raised screen part. As shown in Fig 13, the projecting strip portions are not bonded to, connected to or welded to the tops 145 of the screening material 141; nor are they bonded to, welded to or connected to lower portions 146 of the raised parts of the screening material 141. Alternatively the projecting strip portions 144 may be bonded to, connected to or welded to only the tops 145 of the raised parts of the screening material and/or to the lower portions 146.

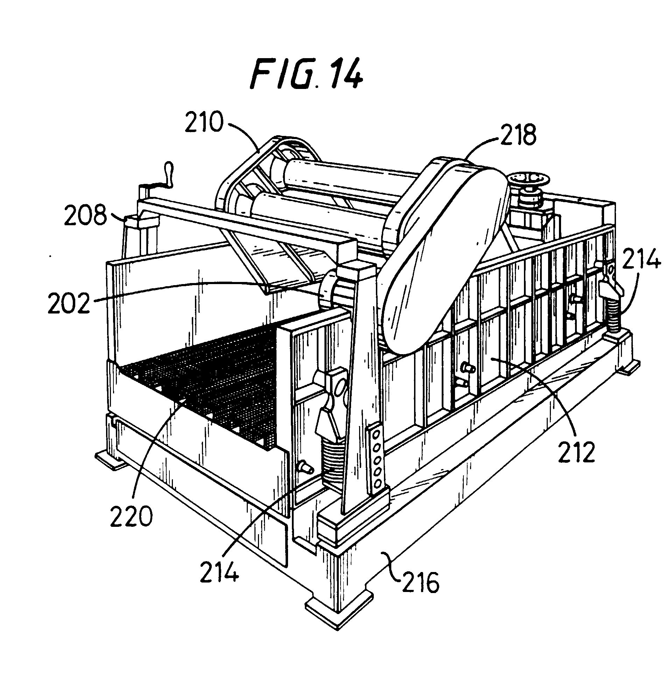

In Fig. 14, a shale shaker 210 has a screen 220 (with screen material, screening cloth or screening mesh as desired) mounted on a vibratable screen mounting apparatus or "basket" 212. The basket 212 is mounted on springs 214 which are supported from a frame 216. Only two of the springs are shown, and the other two are on the side of the shaker which is not seen in Fig. 14. The basket 212 is vibrated by a motor 202 and connected vibrating apparatus 218 which is mounted on the basket 212 and which brings about vibration of the basket and screens. An elevator apparatus 208 provides for raising and lowering an end of the basket 212.

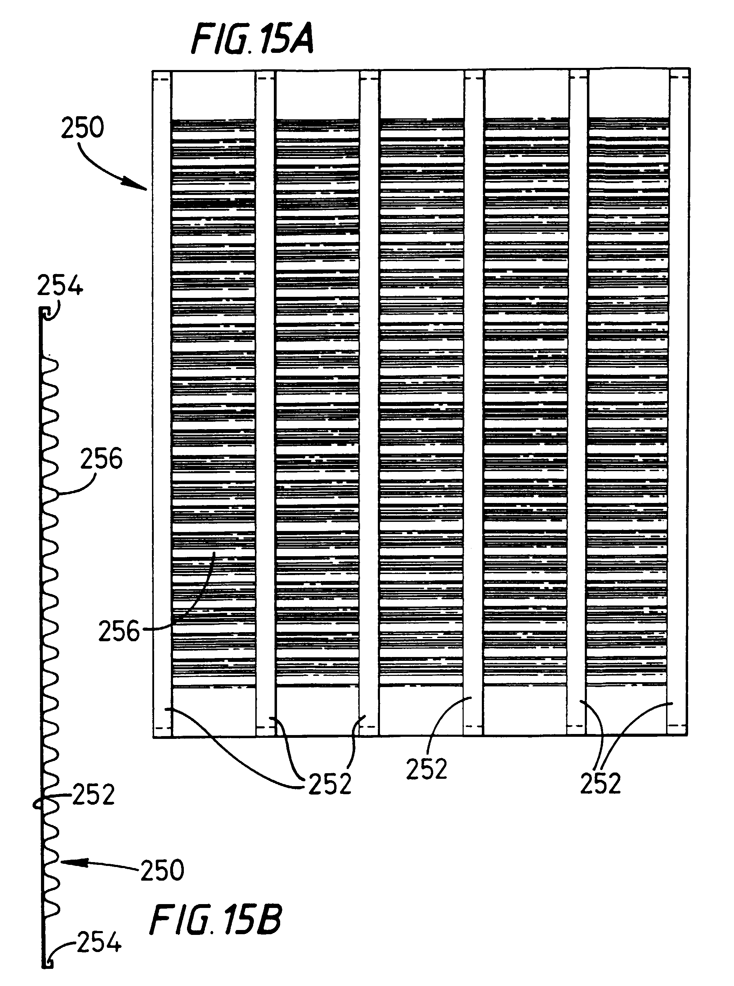

Figs. 15A-15B show a screen 250 which resembles the screen in Fig 1D except that it has no side members. It has a plurality of bottom support strips, each of which has two upper in-turned edges formed into a mounting hook 254. Undulating screening material 256 is bonded to the strips 252.

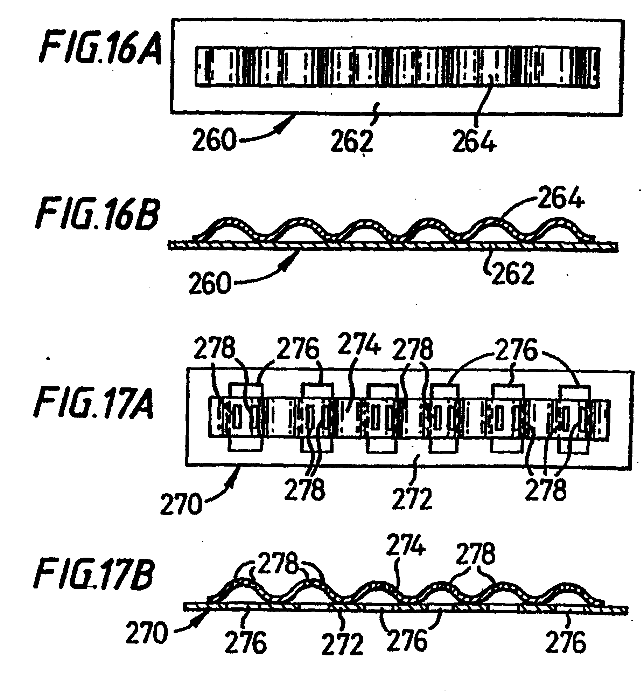

Figs 16A-16B show a support strip 260 having a flat lower strip 262 carrying an undulating upper projecting strip 264 which is narrower in width than the strip 262. Any of the previously described support strips formed of an upper strip carried by a flat lower strip may also have an upper strip that is narrower in width than the lower strip. The strip of Figs 17A-17B is similar and discloses a support strip 270 formed of a lower strip 272 and an upper strip 274 secured to the lower strip. A series of openings 276 is provided through the lower strip 262 to permit fluid flow, and a series of openings 278 is also provided through the upper strip 274. Any strip disclosed herein may have holes therethrough to promote fluid flow. Any strip disclosed herein with an upper projecting portion and a lower strip may have holes in the upper projecting portion, the lower strip, or both to promote fluid flow.

## Claims

1. A filter screen for a vibratory shaker in the form of a corrugated filter element (16, 31, 41, 81, 131, 141, 256) resting on a support which allows the filtrate to pass through it,
characterised in that
the support takes the form of two or more relatively narrow spaced apart separate and distinct strips (20, 42, 56, 74, 75, 91, 100, 111, 112, 121, 125, 133, 134, 143, 144, 252, 260, 264, 272, 274, 282) of material in load-bearing contact with at least the troughs of the corrugations.

2. A screen as claimed in Claim 1, which is rectangular when viewed in plan.

3. A screen as claimed in Claim 2, in which the corrugations run in parallel with the longer dimension of the screen.

4. A screen as claimed in Claim 2, in which the corrugations run in parallel with the shorter dimension of the screen.

5. A screen as claimed in any preceding claim, in which the support strips extend in parallel with the longer dimension of the screen.

6. A screen as claimed in any preceding claim, in which the support strips extend in parallel perpendicularly to the longer dimension of the screen.

7. A screen as claimed in any of Claims 1 to 6, in which the support strips extend generally parallel to the troughs of the corrugations of the screen.

8. A screen as claimed in any of Claims 1 to 6, in which the support strips extend generally perpendicular to the troughs of the corrugations of the screen.

9. A screen as claimed in any preceding claim, in which each of two opposite borders of the screen is connected to a side member (12,14, 32, 34, 46, 47, 52, 54, 72, 73, 92, 93) by means of which the screen may be detachably mounted on a shale shaker or like device.

10. A screen as claimed in Claim 9, in which each side member comprises a hook-shaped portion (29).

11. A screen as claimed in any of Claims 1-8, in which both ends (254) of at least some of the support strips (252) are hook-shaped, and in which the ends are aligned laterally.

12. A screen as claimed in any preceding claim, in which each support strip has a projection portion (101, 113, 125, 134, 144) formed integrally therewith or secured thereto and which, in use, projects into a raised part of said corrugated filter element.

13. A screen as claimed in Claim 12, in which the projection portion contacts the filter element only in the region of the peak of said raised part.

14. A screen as claimed in any preceding claim, in which the filter element takes the form of two or more contacting plies of screening material.

15. A screen as claimed in Claim 14, in which the plies are bonded to each other by adhesive.

16. A screen as claimed in any preceding claim, in which each support strip has a wider base strip secured to that face which is remote from the filter element.

17. A screen as claimed in Claim 16, in which each support and/or base strip is perforated along its length.

18. A vibratory shaker provided with at least one filter screen as claimed in any preceding claim.

19. A shaker as claimed in Claim 18, in which the flow of the liquid to be filtered is generally parallel to the direction of the corrugations.

20. A shaker as claimed in Claim 18, in which the flow of the liquid to be filtered is generally perpendicular to the direction of the corrugations.

## Patentansprüche

1. Filtersieb für einen Vibrationsschüttler in Form eines gewellten Filterelements (16, 31, 41, 81, 131, 141, 265), das auf einem Träger liegt, der den Durchgang des Filtrats zuläßt,
dadurch gekennzeichnet, daß
der Träger die Form zweier oder mehrerer verhältnismäßig eng beabstandeter, getrennter und verschiedener Materialstreifen (20, 42, 56, 74, 75, 91, 100, 111, 112, 121, 125, 133, 134, 143, 144, 252, 260, 264, 272, 274, 282) annimmt, die wenigstens mit den Wellentälern in einem tragenden Kontakt sind.

2. Sieb nach Anspruch 1, das in der Draufsicht rechtwinklig ist.

3. Sieb nach Anspruch 2, in dem die Wellen parallel zur Längsabmessung des Siebs verlaufen.

4. Sieb nach Anspruch 2, in dem die Wellen parallel zur Querabmessung des Siebs verlaufen.

5. Sieb nach einem vorhergehenden Anspruch, bei dem sich die Trägerstreifen parallel zur Längsabmessung des Siebs erstrecken.

6. Sieb nach einem vorhergehenden Anspruch, bei dem sich die Trägerstreifen parallel zueinander und senkrecht zur Längsabmessung des Siebs erstrekken.

7. Sieb nach einem der Ansprüche 1 bis 6, bei dem sich die Trägerstreifen im allgemeinen parallel zu den Wellentälern des Siebs erstrecken.

8. Sieb nach einem der Ansprüche 1 bis 6, bei dem sich die Trägerstreifen im allgemeinen senkrecht zu den Wellentälern des Siebs erstrecken.

9. Sieb nach einem vorhergehenden Anspruch, bei dem jede der beiden gegenüberliegenden Grenzen des Siebs mit einem Seitenelement (12, 14, 32, 34, 46, 47, 52, 54, 72, 73, 92, 93) verbunden ist, durch das das Sieb an einem Schlammschüttelsieb oder einer ähnlichen Vorrichtung lösbar angebracht werden kann.

10. Sieb nach Anspruch 9, bei dem jedes Seitenelement einen hakenförmigen Abschnitt (29) umfaßt.

11. Sieb nach einem der Ansprüche 1-8, bei dem beide Enden (254) wenigstens einiger der Trägerstreifen (252) hakenförmig sind und bei dem die Enden seitlich ausgerichtet sind.

12. Sieb nach einem vorhergehenden Anspruch, bei dem jeder Trägerstreifen einen Vorsprungabschnitt (101, 113, 125, 134, 144) besitzt, der einteilig damit ausgebildet oder daran befestigt ist und der im Gebrauch in einen erhöhten Teil des gewählten Filterelements vorsteht.

13. Sieb nach Anspruch 12, bei dem der Vorsprungabschnitt mit dem Filterelement nur im Bereich der Spitze des erhöhten Teils in Kontakt ist.

14. Sieb nach einem vorhergehenden Anspruch, bei dem das Filterelement die Form zweier oder mehrerer in Kontakt befindlicher Lagen aus Siebmaterial annimmt.

15. Sieb nach Anspruch 14, bei dem die Lagen durch Klebstoff aneinander haften.

16. Sieb nach einem vorhergehenden Anspruch, bei dem jeder Trägerstreifen einen breiteren Basisstreifen besitzt, der an derjenigen Fläche befestigt ist, die vom Filterelement entfernt ist.

17. Sieb nach Anspruch 16, bei dem jeder Träger- und/oder Basisstreifen auf seiner Länge perforiert ist.

18. Vibrationsschüttler, der mit wenigstens einem Filtersieb nach einem vorhergehenden Anspruch versehen ist.

19. Schüttler nach Anspruch 18, in dem die Strömung der zu filternden Flüssigkeit zur Richtung der Wellen im allgemeinen parallel ist.

20. Schüttler nach Anspruch 18, in dem die Strömung der zu filternden Flüssigkeit zur Richtung der Wellen im allgemeinen senkrecht ist.

## Revendications

1. Crible de filtration destiné à un tamis vibrant sous la forme d'un élément de filtre ondulé (16, 31, 41, 81, 131, 141, 256) reposant sur un support qui permet au filtrat de le traverser,
caractérisé en ce que
le support prend la forme de deux ou plus, bandes de matériau, distinctes et séparées, et relativement peu distantes l'une de l'autre (20, 42, 56, 74, 75, 91, 100, 111, 112, 121, 125, 133, 134, 143, 144, 252, 260, 264, 272, 274, 282), en contact porteur avec au moins les creux des ondulations.

2. Crible selon la revendication 1, lequel est rectangulaire lorsqu'il est vu en plan.

3. Crible selon la revendication 2, dans lequel les ondulations s'étendent parallèlement à la plus grande dimension du crible.

4. Crible selon la revendication 2, dans lequel les ondulations s'étendent parallèlement à la plus petite dimension du crible.

5. Crible selon l'une quelconque des revendications précédentes, dans lequel les bandes de support s'étendent parallèlement à la plus grande dimension du crible.

6. Crible selon l'une quelconque des revendications précédentes, dans lequel les bandes de support s'étendent en parallèle perpendiculairement à la plus grande dimension du crible.

7. Crible selon l'une quelconque des revendications 1 à 6, dans lequel les bandes de support s'étendent de façon générale parallèlement aux creux des ondulations du crible.

8. Crible selon l'une quelconque des revendications 1 à 6, dans lequel les bandes de support s'étendent généralement perpendiculairement aux creux des ondulations du crible.

9. Crible selon l'une quelconque des revendications précédentes, dans lequel chacun des deux bords opposés du crible est raccordé à un élément latéral (12, 14, 32, 34, 46, 47, 52, 54, 72, 73, 92, 93) au moyen duquel le crible peut être monté de façon amovible sur un tamis vibrant ou un dispositif analogue.

10. Crible selon la revendication 9, dans lequel chaque élément latéral comprend une partie en forme de crochet (29).

11. Crible selon l'une des revendications 1 à 8, dans lequel les deux extrémités (254) d'au moins certaines bandes de support (252) sont configurées en crochet, et dans lequel les extrémités sont alignées latéralement.

12. Crible selon l'une quelconque des revendications précédentes, dans lequel chaque bande de support comporte une partie en relief (101, 113, 125, 134, 144) formée solidairement avec elle ou fixée à elle et qui, en fonctionnement, s'avance en une partie relevée dudit élément de filtre ondulé.

13. Crible selon la revendication 12, dans lequel la partie en relief est en contact avec l'élément de filtre seulement dans la zone la plus haute de ladite partie relevée.

14. Crible selon l'une quelconque des revendications précédentes, dans lequel l'élément de filtre prend la forme de deux, ou plus, couches de contact de matériau de criblage.

15. Crible selon la revendication 14, dans lequel les couches sont liées l'une à l'autre par un adhésif.

16. Crible selon l'une quelconque des revendications précédentes, dans lequel chaque bande de support comporte une bande de base plus large fixée à celle des faces qui est distante de l'élément de filtre.

17. Crible selon la revendication 16, dans lequel chaque support et/ou chaque bande de base est perforé(e) sur toute sa longueur.

18. Tamis vibrant doté d'au moins un crible de filtration selon l'une quelconque des revendications précédentes.

19. Tamis selon la revendication 18, dans lequel l'écoulement du liquide à filtrer est globalement parallèle à la direction des ondulations.

20. Tamis selon la revendication 18, dans lequel l'écoulement du liquide à filtrer est globalement perpendiculaire à la direction des ondulations.
